(19) **Europäisches Patentamt European Patent Office Office européen des brevets**

(11) **EP 3 120 548 B1**

(12) **EUROPEAN PATENT SPECIFICATION**

(45) Date of publication and mention of the grant of the patent:
**11.12.2019 Bulletin 2019/50**

(51) Int Cl.:
**H04N 19/70** (2014.01)     **H04N 19/105** (2014.01)
**H04N 19/182** (2014.01)     **H04N 19/94** (2014.01)

(21) Application number: **15764195.2**

(22) Date of filing: **16.03.2015**

(86) International application number:
**PCT/FI2015/050172**

(87) International publication number:
**WO 2015/140402 (24.09.2015 Gazette 2015/38)**

(54) **DECODING OF VIDEO USING A LONG-TERM PALETTE**

DEKODIERUNG VON VIDEO UNTER VERWENDUNG EINER REFERENZ-PALETTE

DÉCODAGE VIDÉO UTILISANT UNE PALETTE À LONG TERME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2014 US 201461954247 P**

(43) Date of publication of application:
**25.01.2017 Bulletin 2017/04**

(73) Proprietor: **Nokia Technologies Oy**
**02610 Espoo (FI)**

(72) Inventors:
• **BUGDAYCI, Done**
  **FI-33720 Tampere (FI)**
• **LAINEMA, Jani**
  **FI-33239 Tampere (FI)**
• **UGUR, Kemal**
  **FI-33100 Tampere (FI)**
• **HANNUKSELA, Miska**
  **FI-33610 Tampere (FI)**

(74) Representative: **Nokia EPO representatives**
**Nokia Technologies Oy**
**Karakaari 7**
**02610 Espoo (FI)**

(56) References cited:
**WO-A2-2009/036255**

• **LAI P ET AL: "Non-RCE4: Major color table (palette) sharing", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P0153, 4 January 2014 (2014-01-04), XP030115670,**
• **LAI, POLIN ET AL.: 'Non-RCE4: Major color table (palette) sharing' 16. JCT-VC MEETING; 9-1-2014 - 17-1-2014; SAN JOSE; (JOINT COLLABORATIVE TEAM ONVIDEO CODING OF ISO/IEC JTC1/SC29/WG11 AND ITU-T SG.16) 04 January 2014, SAN JOSÉ, pages 1 - 6, XP030115670 Retrieved from the Internet: <URL:http://phenix.int-evry.fr/jct>**
• **LAROCHE, GUILLAUME ET AL.: 'Non-RCE4: palette prediction for palette mode' 16. JCT-VC MEETING; 9-1-2014 - 17-1-2014; SAN JOSE; (JOINT COLLABORATIVE TEAM ONVIDEO CODING OF ISO/IEC JTC1/SC29/WG11 AND ITU-T SG.16), [Online] 10 January 2014, SAN JOSÉ, pages 1 - 6, XP030115611 Retrieved from the Internet: <URL:HTTP://PHENIX.INT-EVRY.FR/JCT>**
• **PARK, CHANYUL ET AL.: 'Non-RCE4: On palette update for palette coding' 16. JCT-VC MEETING; 9-1-2014 - 17-1-2014; SAN JOSE; (JOINT COLLABORATIVE TEAM ONVIDEO CODING OF ISO/IEC JTC1/SC29/WG11 AND ITU-T SG.16 ) 10 January 2014, SAN JOSÉ, pages 1 - 6, XP030115573 Retrieved from the Internet: <URL:http://phenix.int-evry.fr/jct>**

- GUO, LIWEI ET AL.: 'Evaluation of Palette Mode Coding on HM-12.0+RExt-4.1' 15. JCT-VC MEETING; 23-10-2013 - 1-11-2013; GENEVA; (JOINT COLLABORATIVE TEAM ONVIDEO CODING OF ISO/IEC JTC1/SC29/WG11 AND ITU-T SG.16) 23 October 2013, GENEVA, pages 1 - 7, XP030115268 Retrieved from the Internet: <URL:http://phenix.int-evry.fr/jct>
- GUO, XUN ET AL.: 'AHG8: Major-color-based screen content coding' 15.JCT-VC MEETING; 23-10-2013 - 1-11-2013; GENEVA; (JOINT COLLABORATIVE TEAM ONVIDEO CODING OF ISO/IEC JTC1/SC29/WG11 AND ITU-T SG.16) 25 October 2013, GENEVA, pages 1 - 10, XP030115219 Retrieved from the Internet: <URL:http://phenix.int-evry.fr/jct>
- SULLIVAN, G. J. ET AL.: 'Overview of the High Efficiency Video Coding (HEVC) Standard' IEEE TRANSACTIONS ON CIRCUIT AND SYSTEMS FOR VIDEO TECHNOLOGY vol. 22, no. 12, December 2012, pages 1649 - 1668, XP011486324 DOI: 10.1109/TCSVT.2012.2221191
- SJÖBERG, R. ET AL.: 'Overview of HEVC High-Level Syntax and Reference Picture Management' IEEE TRANSACTIONS ON CIRCUIT AND SYSTEMS FOR VIDEO TECHNOLOGY vol. 22, no. 12, December 2012, pages 1858 - 1870, XP011486337 DOI: 10.1109/TCSVT.2012.2223052
- BUGDAYCI, D. ET AL.: 'AHG10: Improvements on palette coding' 17. JCT-VC MEETING; 27-3-2014 - 4-4-2014; VALENCIA; (JOINT COLLABORATIVE TEAM ONVIDEO CODING OF ISO/IEC JTC1/SC29/WG11 AND ITU-T SG.16) 18 March 2014, VALENCIA, pages 1 - 8, XP030115969 Retrieved from the Internet: <URL:http://phenix.int-evry.fr/jct>
- 'High Efficiency Video Coding (HEVC) - MAPL', [Online] 26 September 2014, pages 1 - 71, XP055358451 Retrieved from the Internet: <URL:HTTP://MAPL.NCTU.EDU.TW/COURSE/SMSDI_2 014/FILES/[4]HEVC.PDF>
- ZHU W ET AL: "Non-RCE3:Template-based palette prediction", 14. JCT-VC MEETING; 25-7-2013 - 2-8-2013; VIENNA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-N0169, 15 July 2013 (2013-07-15) , XP030114647,
- ORCHARD M T ET AL: "COLOR QUANTIZATION OF IMAGES", IEEE TRANSACTIONS ON SIGNAL PROCESSING, IEEE SERVICE CENTER, NEW YORK, NY, US, vol. 39, no. 12, 1 December 1991 (1991-12-01), pages 2677-2690, XP000275119, ISSN: 1053-587X, DOI: 10.1109/78.107417
- KUSSWURM D C: "A COLOR QUANTIZER FOR VIDEO SEQUENCES", VISUAL COMMUNICATIONS AND IMAGE PROCESSING; 20-1-2004 - 20-1-2004; SAN JOSE,, vol. 3308, 1 January 1998 (1998-01-01), pages 105-113, XP000979621, DOI: 10.1117/12.302432 ISBN: 978-1-62841-730-2

**Description**

## TECHNICAL FIELD

The present application relates generally to coding and decoding of digital material. In particular, the present application relates to scalable and high fidelity coding.

## BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

A video coding system may comprise an encoder that transforms an input video into a compressed representation suited for storage/transmission and a decoder that can uncompress the compressed video representation back into a viewable form. The encoder may discard some information in the original video sequence in order to represent the video in a more compact form, for example, to enable the storage/transmission of the video information at a lower bitrate than otherwise might be needed.

A submission to the Joint Collaborative Team on Video Coding (JCT-VC) of the ITU-T and ISO/IEC 16th meeting in San Jose January 2014, entitled "Non-RCE4: Major color table (palette) sharing" discloses a method of sharing colour palettes in the encoding of a coding unit (CU). In particular the above submission teaches that either use a stored colour palette or a new colour palette can be used to encode the CU.

## SUMMARY

The invention is set out in the appended set of claims; the further examples called "embodiments" in the description are illustrative examples. Some embodiments provide a method, an apparatus, a computer program product, a computer-readable medium for encoding and decoding video information.

Various aspects of examples of the invention are provided in the detailed description.

According to a first aspect, there is provided an apparatus configured to; construct a long-term palette for decoding a coding unit using a signaled value for the coding unit and a color value entry from a long term palette, wherein the palette for decoding the coding unit is constructed to be a combination of the signaled color value for the coding unit and the color value referred by the at least one long term palette entry; and update the long-term palette after decoding a coding unit based on adding a new color value to the long term palette, wherein the new color is a color value in the palette for the coding unit that was not copied from the long term palette, and wherein the long term palette is signaled in a sequence parameter set or a video parameter set.

According to an embodiment example, the apparatus is further configured to initialize the long-term palette; generate a palette that is used for encoding or decoding a coding unit by either or both selecting at least one color value from a local palette and at least one color value from a long-term palette; or selecting color values from a long-term palette; of signaling at least one color value to be included in the palatte; if the coding unit is coded in palette mode and if the coding unit comprises a color that was not copied from the long-term palette add a new color to the long-term palette with a long-term palette update process.

According to an embodiment, the apparatus is further is configured to signal which entries of the palette for a certain coding unit are copied from a long-term palette and how many entries are explicitly signaled.

According to an embodiment, the apparatus is further configured to initialize the long-term palette to be empty.

According to an embodiment, the apparatus is further configured to derive the initial long-term palette from a previous picture.

According to an embodiment, the apparatus is further configured to maintain two or more long-term palettes dynamically.

According to an embodiment, the size of the long-term palette is fixed or adaptive.

According to an embodiment, the palette used for a coding unit can be a combination of the long-term palette and a palette signaled at coding unit level.

According to an embodiment, the apparatus is further configured to perform a long-term palette update process, where a new color is added to the long-term palette if none of the entries within the long-term palette contains that color.

According to an embodiment, the apparatus is further configured to perform long-term palette update process, where a new color is added to the long-term palette first by checking subset of the entries within the long-term palette if the same color exists or not.

According to an embodiment, the apparatus is further configured to perform long-term palette update process, where before adding the new color it is determined that the palette is full whereby one of the following is performed: increasing the palette size by 1; removing the color that entered the long-term palette the first and adding the new color; removing the color that is used the least and adding the new color.

A method comprising; constructing a palette used for decoding a coding unit using a signaled color value for the coding unit and a color value entry from a long-term palette, wherein the palette for decoding the coding unit is constructed to be a combination of the signaled color value for the coding unit and the color value referred by the at least one long term palette entry; and updating the long-term palette after decoding the coding unit based on adding a new color value to the long term palette wherein the new color is a color value in the palette for the coding unit that was not copied from the long term palette, and wherein the long term palette is signaled in a in a sequence parameter set or a video parameter set.

According to an embodiment, the method further comprises initializing the long-term palette; generating a palette that is used for encoding or decoding a coding unit by either or both; selecting at least one color value from a long-term palette; or signaling at least one color value to be included in the palette; if the coding unit is coded in palette mode and if the coding unit comprises a color that was not copied from the long-term palette adding a new color to the long-term palette with a long-term palette update process.

According to a sixth aspect, the method comprises constructing a long-term palette during an encoding process or a decoding process; and updating the long-term palette dynamically after coding a coding unit, and constructing a palette used for coding a coding unit using information from one of the following: from local or neighboring palettes, from the long-term palette or as separately signaled.

According to a seventh aspect, there is provided an apparatus comprising at least one processor; and at least one memory including computer program code the at least one memory and the computer program code configured to, with the at least one processor, cause the apparatus to perform at least the following: constructing a long-term palette during an encoding process or a decoding process; and updating the long-term palette dynamically after coding a coding unit, and constructing a palette used for coding a coding unit using information from one of the following: from local or neighboring palettes, from the long-term palette or as separately signaled.

According to an eighth aspect, there is provided an apparatus comprising means for processing; means for constructing a long-term palette during an encoding process or a decoding process; and updating the long-term palette dynamically after coding a coding unit, and means for constructing a palette used for coding a coding unit using information from one of the following: from local or neighboring palettes, from the long-term palette or as separately signaled.

According to a ninth aspect, there is provided a computer program product comprising a computer-readable medium bearing computer program code embodied therein for use with a computer, the computer program code comprising code for constructing a long-term palette during an encoding process or a decoding process; and updating the long-term palette dynamically after coding a coding unit, and code for constructing a palette used for coding a coding unit using information from one of the following: from local or neighboring palettes, from the long-term palette or as separately signaled.

According to a tenth aspect, there is provided a non-transitory computer-readable medium encoded with instructions that, when executed by a computer, perform constructing a long-term palette during an encoding process or a decoding process; and updating the long-term palette dynamically after coding a coding unit, and constructing a palette used for coding a coding unit using information from one of the following: from local or neighboring palettes, from the long-term palette or as separately signaled.

According to an embodiment example, the method comprises initializing the long-term palette; generating a palette that is used for coding a coding unit by either selecting at least one color value from a local palette and at least one color value from a long-term palette; or selecting color values from either a local palette or a long-term palette; if the coding unit is coded in palette mode and if the coding unit comprises colors that were not copied from a local palette and were not copied from the long-term palette adding corresponding new color to the long-term palette with a long-term palette update process.

According to an embodiment, the local palette refers to a palette used for another coding unit or a combination of palettes used for other coding units or a subset of such palettes.

According to an embodiment, the method comprises initializing the long-term palette information at various locations.

According to an embodiment, the method comprises initializing the long-term palette to be empty.

According to an embodiment, the method comprises initializing dynamic long-term palette to be equal to a signaled long-term palette.

According to an embodiment, the method comprises deriving the initial long-term palette from a previous picture.

According to an embodiment, the method comprises maintaining two or more long-term palettes dynamically.

According to an embodiment, the size of the long-term palette is fixed or adaptive.

According to an embodiment, the palette used for a coding unit can be a combination of the long-term palette and a palette signaled at coding unit level.

According to an embodiment, the method comprises long-term palette update process, where a new color is added to the long-term palette if none of the entries within the long-term palette contains that color.

According to an embodiment, the method comprises long-term palette update process, where a new color is added to the long-term palette first by checking subset of the entries within the long-term palette if the same color exists or not.

According to an embodiment, the method comprises long-term palette update process, where before adding the new color it is determined that the palette is full whereby one of the following is performed: increasing the palette size by 1; removing the color that entered the long-term palette the first and adding the new color; removing the color that is used the least and adding the new color.

## BRIEF DESCRIPTION OF THE DRAWINGS

For a more complete understanding of example embodiments of the present invention, reference is now made to the following descriptions taken in connection with the accompanying drawings in which:

Figure 1 illustrates a block diagram of a video coding system according to an embodiment;
Figure 2 illustrates a layout of an apparatus according to an embodiment;
Figure 3 illustrates an arrangement for video coding comprising a plurality of apparatuses, networks and network elements according to an example embodiment;
Figure 4 illustrates a block diagram of a video encoder according to an embodiment;
Figure 5 illustrates a block diagram of a video decoder according to an embodiment;
Figures 6a and 6b illustrate examples of coding units.

## DETAILED DESCRIPTON OF SOME EXAMPLE EMBODIMENTS

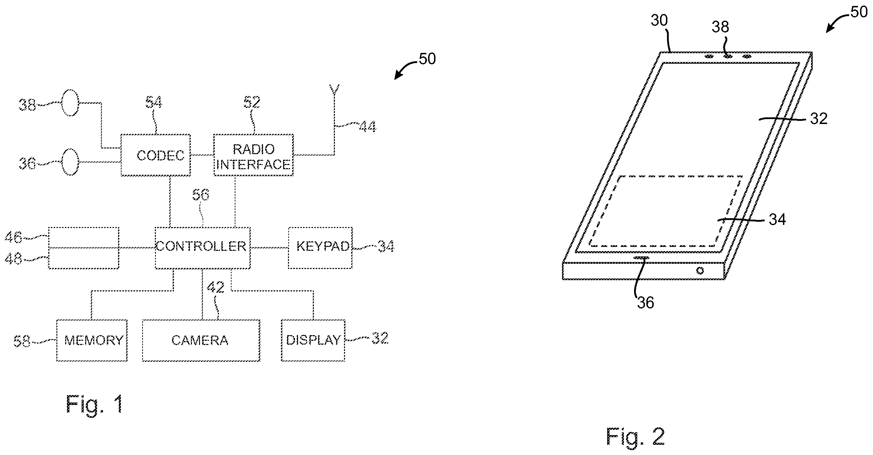

Figure 1 shows a block diagram of a video coding system according to an example embodiment as a schematic block diagram of an exemplary apparatus or electronic device 50, which may incorporate a codec according to an embodiment of the invention. Figure 2 shows a layout of an apparatus according to an example embodiment. The elements of Figs. 1 and 2 will be explained next.

The electronic device 50 may for example be a mobile terminal or user equipment of a wireless communication system. However, it would be appreciated that embodiments of the invention may be implemented within any electronic device or apparatus which may require encoding and decoding or encoding or decoding video images.

The apparatus 50 may comprise a housing 30 for incorporating and protecting the device. The apparatus 50 further may comprise a display 32 in the form of a liquid crystal display. In other embodiments of the invention the display may be any suitable display technology suitable to display an image or video. The apparatus 50 may further comprise a keypad 34. In other embodiments of the invention any suitable data or user interface mechanism may be employed. For example the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device which in embodiments of the invention may be any one of: an earpiece 38, speaker, or an analogue audio or digital audio output connection. The apparatus 50 may also comprise a battery 40 (or in other embodiments of the invention the device may be powered by any suitable mobile energy device such as solar cell, fuel cell or clockwork generator). The apparatus may further comprise a camera 42 capable of recording or capturing images and/or video. In some embodiments the apparatus 50 may further comprise an infrared port for short range line of sight communication to other devices. In other embodiments the apparatus 50 may further comprise any suitable short range communication solution such as for example a Bluetooth wireless connection or a USB/firewire wired connection.

The apparatus 50 may comprise a controller 56 or processor for controlling the apparatus 50. The controller 56 may be connected to memory 58 which in embodiments of the invention may store both data in the form of image and audio data and/or may also store instructions for implementation on the controller 56. The controller 56 may further be connected to codec circuitry 54 suitable for carrying out coding and decoding of audio and/or video data or assisting in coding and decoding carried out by the controller 56.

The apparatus 50 may further comprise a card reader 48 and a smart card 46, for example a UICC and UICC reader for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

In some embodiments of the invention, the apparatus 50 comprises a camera capable of recording or detecting individual frames which are then passed to the codec 54 or controller for processing. In some embodiments of the invention, the apparatus may receive the video image data for processing from another device prior to transmission and/or storage. In some embodiments of the invention, the apparatus 50 may receive either wirelessly or by a wired connection the image for coding/decoding.

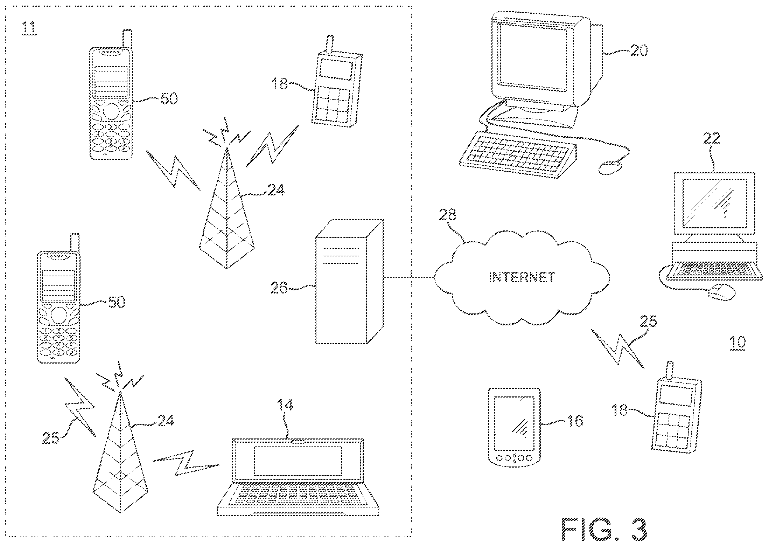

Fig. 3 shows an arrangement for video coding comprising a plurality of apparatuses, networks and network elements according to an example embodiment. With respect to Figure 3, an example of a system within which embodiments of the present invention can be utilized is shown. The system 10 comprises multiple communication devices which can communicate through one or more networks. The system 10 may comprise any combination of wired or wireless networks including, but not limited to a wireless cellular telephone network (such as a GSM, UMTS, CDMA network etc.), a wireless local area network (WLAN) such as defined by any of the IEEE 802.x standards, a Bluetooth personal area network, an Ethernet local area network, a token ring local area network, a wide area network, and the Internet.

The system 10 may include both wired and wireless communication devices or apparatus 50 suitable for implementing embodiments of the invention. For example, the system shown in Figure 3 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

Some or further apparatuses may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11 and any similar wireless communication technology. A communications device involved in implementing various embodiments of the present invention may communicate using various media including, but not limited to, radio, infrared, laser, cable connections, and any suitable connection.

Video codec may comprise an encoder that transforms the input video into a compressed representation suited for storage/transmission, and a decoder is able to uncompress the compressed video representation back into a viewable form. The encoder may discard some information in the original video sequence in order to represent the video in more compact form (i.e. at lower bitrate).

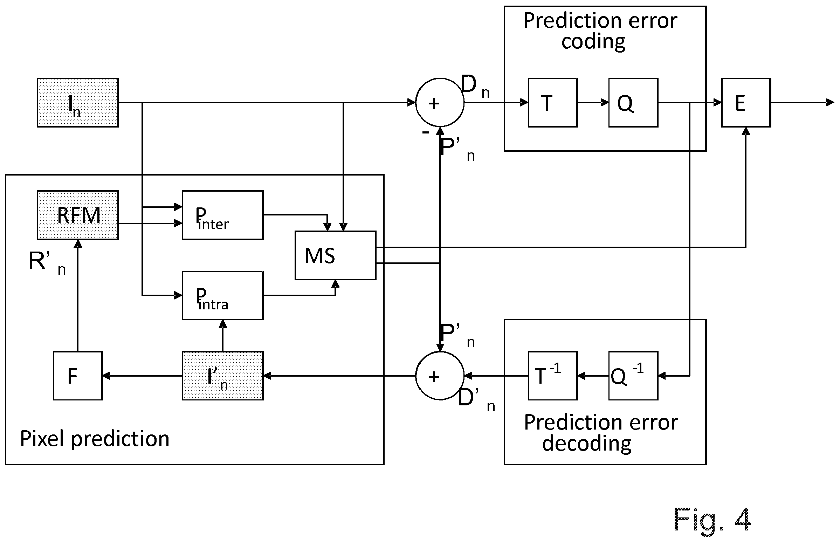

Hybrid video codecs, for example ITU-T H.263 and H.264, encode the video information in two phases. At first, pixel values in a certain picture are (or "block") are predicted fro example by motion compensation means (finding and indicating an area in one of the previously coded video frames that corresponds closely to the block being coded) or by spatial means (using the pixel values around the block to be coded in a specified manner). Secondly, the prediction error, i.e. the difference between the predicted block of pixels and the original block of pixels, is coded. This may be done by transforming the difference in pixel values using a specified transform (e.g. Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size or transmission bitrate). The encoding process is illustrated in Figure 4. Figure 4 illustrates an example of a video encoder, where In: Image to be encoded; $P'_n$: Predicted representation of an image block; $D_n$: Prediction error signal; $D'_n$: Reconstructed prediction error signal; I'n: Preliminary reconstructed image; $R'_n$: Final reconstructed image ; $T, T^{-1}$: Transform and inverse transform; $Q, Q^{-1}$: Quantization and inverse quantization; E: Entropy encoding; RFM: Reference frame memory; $P_{inter}$: Inter prediction; $P_{intra}$: Intra prediction; MS: Mode selection; F: Filtering.

In some video codecs, such as HEVC, video pictures are divided into coding units (CU) covering the area of the picture. A CU consists of one or more prediction units (PU) defining the prediction process for the samples within the CU and one or more transform units (TU) defining the prediction error coding process for the samples in said CU.

A CU may consist of a square block of samples with a size selectable from a predefined set of possible CU sizes. A CU with the maximum allowed size may be named as CTU (coding tree unit) and the video picture is divided into nonoverlapping CTUs. A CTU can be further split into a combination of smaller CUs, e.g. by recursively splitting the CTU and resultant CUs. Each resulting CU may have at least one PU and at least one TU associated with it. Each PU and TU can be further split into smaller PUs and TUs in order to increase granularity of the prediction and prediction error coding processes, respectively. Each PU has prediction information associated with it defining what kind of a prediction is to be applied for the pixels within that PU (e.g. motion vector information for inter-predicted Pus and intra prediction directionality information for intra predicted PUs). Similarly, each TU is associated with information describing the prediction rerror decoding process for the samples within the said TU (including e.g. DCT coefficient information). It may be signaled at CU level whether prediction error coding is applied or not for each CU. In the case there is no prediction errors residual associated with the CU, it can be considered there are no TUs for said CU. The division of the image into CUs, and division of CUs into PUs and TUs may be signaled in the bitstream allowing the decoder to reproduce the intended structure of these units.

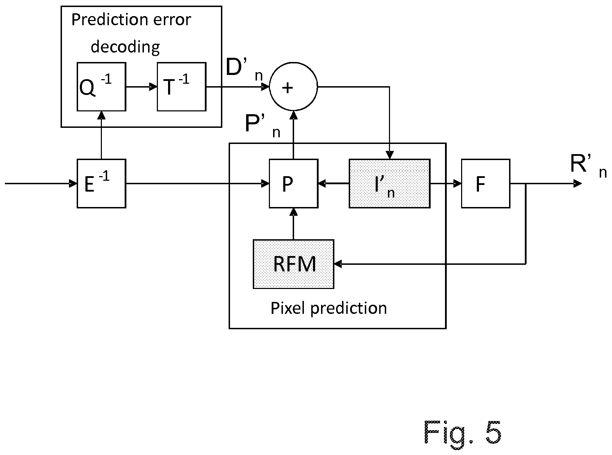

The decoded reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain). After applying prediction and prediction error decoding means, the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence. The decoding process is illustrated in Figure 5. Figure 5 illustrates a block diagram of a video decoder where $P'_n$: Predicted representation of an image block; $D'_n$: Reconstructed prediction error signal; $I'_n$: Preliminary reconstructed image; $R'_n$: Final reconstructed image; $T^{-1}$: Inverse transform; $Q^{-1}$: Inverse quantization; $E^{-1}$: Entropy decoding; **RFM:** Reference frame memory; **P:** Prediction (either inter or intra); **F:** Filtering.

Instead, or in addition to approaches utilizing sample value prediction and transform coding for indicating the coded sample values, a color palette based coding can be used. Palette based coding refers to a family of approaches for which a palette, i.e. a set of colors and associated indexes, is defined and the value for each sample within a coding unit is expressed by indicating its index in the palette. Palette based coding can achieve good coding efficiency in coding units with a small number of colors (such as image areas which are representing computer screen content, like text or simple graphics). In order to improve the coding efficiency of palette coding different kinds of palette index prediction approaches can be utilized, or the palette indexes can be run-length coded to be able to represent larger homogenous image areas efficiently.

A Decoded Picture Buffer (DPB) may be used in the encoder and/or in the decoder. There are two reasons to buffer decoded pictures, for references in inter prediction and for reordering decoded pictures into output order. As H.264/AVC and HEVC provide a great deal of flexibility for both reference picture marking and output reordering, separate buffers for reference picture buffering and output picture buffering may waste memory resources. Hence, the DPB may include a unified decoded picture buffering process for reference pictures and output reordering. A decoded picture may be removed from the DPB when it is no longer used as a reference and is not needed for output.

The motion information may be indicated in video codecs with motion vectors associated with each motion compensated image block. Each of these motion vectors represents the displacement of the image block in the picture to be coded (in the encoder side) or decoded (in the decoder side) and the prediction source block in one of the previously coded or decoded pictures. In order to represent motion vectors efficiently, those vectors may be coded differentially with respect to block specific predicted motion vectors. In video codecs, the predicted motion vectors may be created in a predefined way, e.g. by calculating the median of the encoded or decoded motion vectors or the adjacent blocks. Another way to create motion vector predictions is to generate a list of candidate predictions from adjacent blocks and/or co-located blocks in temporal reference pictures and signalling the chose candidate as the motion vector prediction. In addition to predicting the motion vector values, the reference index of previously coded/decoded picture can be predicted. The reference index is typically predicted from adjacent blocks and/or co-located blocks in temporal reference picture. Moreover, high efficiency video codecs may employ an addition motion information coding/decoding mechanism, called "merging/merge mode", where all the motion field information, which includes motion vector and corresponding reference picture index for each available reference picture list, is predicted and used without any modification/correction. Similarly, predicting the motion field information is carried out using the motion field information or adjacent blocks and/or co-located blocks in temporal reference pictures and the user motion field information is signaled among a list of motion field candidate list filled with motion field information of available adjacent /co-located blocks.

In addition to applying motion compensation for inter picture prediction, similar approach can be applied to intra picture prediction. In this case the displacement vector indicates where from the same picture a block of samples can be copied to form a prediction of the block to be coded or decoded. This kind of intra block copying methods can improve the coding efficiency substantially in presence of repeating structures within the frame - such as text or other graphics.

In video codecs, the prediction residual after motion compensation may be first transformed with a transform kernel (e.g. DCT) and then coded. The reason for this is that there may still exit some correlation among the residual and transform can in many cases help reduce this correlation and provide more efficient coding.

Video encoders may utilize Lagrangian cost functions to find optimal coding modes, e.g. the desired macroblock mode and associated motion vectors. This kind of cost function uses a weighting factor $\lambda$ to tie together the (exact or estimated) image distortion due to lossy coding methods and the (exact or estimated) amount of information that is required to represent the pixel values in an image area:

$$C=D+\lambda R$$

Where C is the Lagrangian cost to be minimized, D is the image distortion (e.g. Mean Squared Error) with the mode and motion vectors considered, and R the number of bits needed to represent the required data to reconstruct the image block in the decoder (including the amount of data to represent the candidate motion vectors).

Scalable video coding refers to coding structure where one bitstream can contain multiple representations of the content at different bitrates, resolutions or frame rates. In these cases the receiver can extract the desired representation depending on its characteristics (e.g. resolution that matches best the display device). Alternatively, a server or a network element can extract the portions of the bitstream to be transmitted to the receiver depending on e.g. the network characteristics or processing capabilities of the receiver. A scalable bitstream may consist of a "base layer" providing the lowest quality video available and one or more enhancement layers that enhance the video quality when received and decoded together with the lower layers. In order to improve coding efficiency for the enhancement layers, the coded representation of that layer may depend on the lower layers. E.g. the motion and mode information of the enhancement layer can be predicted from lower layers. Similarly the pixel data of the lower layers can be used to create prediction for the enhancement layer.

A scalable video codec for quality scalability (also known as Signal-to-Noise or SNR) and/or spatial scalability may be implemented as follows. For a base layer, a conventional non-scalable video encoder and decoder are used. The reconstructed/decoded pictures of the base layer are included in the reference picture buffer for an enhancement layer. In H.264/AVC, HEVC, and similar codecs using reference picture list(s) for inter prediction, the base layer decoded pictures may be inserted into a reference picture list(s) for coding/decoding of an enhancement layer picture similarly to the decoded reference pictures of the enhancement layer. Consequently, the encoder may choose a base-layer reference picture as inter prediction reference and indicate its use with a reference picture index in the coded bitstream. The decoder decodes from the bitstream, for example from a reference picture index, that a base-layer picture is used as inter prediction reference for the enhancement layer. When a decoded base-layer picture is used as prediction reference for an enhancement layer, it is referred to as an inter-layer reference picture.

In addition to quality scalability, there are also other scalability modes: spatial scalability, bit-depth scalability and chroma format scalability. In spatial scalability base layer pictures are coded at a higher resolution than enhancement layer pictures. In Bit-depth scalability base layer pictures are coded at lower bit-depth (e.g. 8 bits) than enhancement layer pictures (e.g. 10 or 12 bits). In chroma format scalability base layer pictures provide higher fidelity in chroma (e.g. coded in 4:4:4 chroma format) than enhancement layer pictures (e.g. 4:2:0 format).

In the above scalability cases, base layer information can be used to code enhancement layer to minimize the additional bitrate overhead.

Scalability can be enabled in two ways. Either by introducing new coding modes for performing prediction of pixel values or syntax from lower layers of the scalable representation or by placing the lower layer pictures to the reference picture buffer (decoded picture buffer, DPB) of the higher layer. The first approach is more flexible and thus can provide better coding efficiency in most cases. However, the second, reference frame based scalability, approach can be implemented very efficiently with minimal changes to single layer codecs while still achieving majority of the coding efficiency gains available. Essentially a reference frame based scalability codec can be implemented by utilizing the same hardware or software implementation for all the layers, just taking care of the DPB management by external means.

Palette coding methods utilize the palette information of neighboring blocks for prediction the palette of the current block. This approach is useful for improving the coding efficiency, however color correlations between non-neighboring blocks are not exploited. For example, a picture having a background picture with several dominant colors and a foreground object. For the block that are neighboring to block containing the foreground object, the palette prediction is not usable. The methods relate to a solution having a mode where palette entries from the previous CU can be reused for the current CU; to a solutions where coded palette can be shared by one or more CUs; and to solutions, where it is signaled whether to use the palette of left CU or top CU.

Present embodiments provide a solution to exploit statistical correlations between palette coding CUs that are not neighbors to each other. This can be implemented by signalling along-term palette at a higher level than CU (e.g.

at slice header) and constructing a palette for each CU using information either from neighboring palettes, or from the long-term palette, or as separately signaled. As an alternative, the implementation may comprise dynamically keeping track of along-term palette based on the signaled color information, and constructing a palette for each CU using information either from neighboring palettes, or from the long-term palette, or as separately signaled. These alternatives to exploit the color correlation among non-neighboring blocks are disclosed next in more detailed manner.

According to a first embodiment, a long-term palette is signaled at higher level than CU (e.g. at slice header). The long-term palette information may comprise at least the number of colors present in the long-term palette and color values for each entry in the long-term palette. This long-term palette information is signaled at the slice header. The palette that is used for coding of each CU is constructed using information either from neighboring palettes, or from the long-term palette, or as separately signaled. According to an embodiment, the coding unit compressed in palette mode is decoded as follows: At first, indication whether a long-term palette is signaled or not is decoded at slice header. If long-term palette is signaled, information on the color information for each long-term palette entry is decoded. If long-term palette is used, palette indexes for each CU coded in palette mode are decoded, where at least one palette index refers to a color value in the long-term palette.

Instead of signalling the long-term palette information at slice header, the long-term palette information can be signaled at various levels, such as picture parameter set or adaptation parameter set. A set of long-term palettes may be signaled e.g. in a sequence-level syntax structure, such as SPS (Sequence Parameter Set) and/or VPS (Video Parameter Set). The signaled long-term palettes may be indexed or may include or be associated with an explicitly signaled identifier value. A long-term palette to be used may be selected from the set of long-term palette by including an index or identifier of the long-term palette for example in a slice header, PPS (Picture Parameter Set) or APS (Adaption Parameter Set). The possibility of not using a long-term palette form the set of long-term palettes may be enabled, i.e. it may be indicated e.g. in a slice header, PPS or APS that long-term palette information is signaled by other means than an index or identifier to the set of long-term palettes.

Some entries of the long-term palette can be shared between earlier signaled long-term palettes. For example, a long-term palette for an enhancement-layer picture may be inferred to be the same as the long-term palette of the base-layer picture or a reference-layer picture.

The size of the long-term palette can be fixed, and hence not signaled, or the size of the long-term palette can be adaptive.

Existence of a long-term palette can be always signaled or it can be signaled conditionally. For example, it may be signaled only for Intra coded slices or only if there is indication about usage of palette mode coding.

The binarization of the long-term palette indexes signaled at CU level can depend on the size of the long-term palette. For example different fixed length coding sizes can be used. The binarization of the long-term palette indexes signaled at CU level can be further signaled. For example, depending on the histogram of the occurrences of palette indices, different VLC (Variable Length Coding) tables can be used.

The palette used for a CU can be a combination of the long-term palette and a palette signaled at CU level. For example, a palette for a certain CU may comprise at least one palette entry from a long-term palette and at least one palette entry from a palette predicted from a palette used for a previously decoded CU. A palette for a certain CU may also comprise of at least one palette entry from a long-term palette and at least one palette entry that is signaled individually for the CU.

The palette used for a CU can include entries from all combinations of the following: last decoded palette, long-term palette, or explicitly signaled. Each color component (such as Y, U, V or R, G, B) can have a separate long-term palette as well as there can be a joint long-term palette.

Indication of the long-term palette usage for the (de)coding of palette entries can be signaled separately for each color component, or these can be decided jointly for all color components.

It can be signaled which entries of the palette for a certain CU are copied from a long-term palette, which entries are copied from a palette used for a previously decoded CU and how many entries are explicitly signaled.

The long-term palette used for each CU can be dynamically changed. For example, if some of the color value of the neighboring palette is included also in the long-term palette, those values can be removed from the long-term palette and a new long-term palette for coding the current CU can be constructed.

An encoder may derive a long-term palette to be signaled using various methods including one or more of the following or a combination thereof, but not limited to these: The encoder may derive the long-term palette based on used palette entries of conventional and/or long-term palette(s) in one or more previous pictures, in (de)coding order. For example, the encoder may include those palette entries from the conventional and long-term palette(s) of the previous picture that are most used e.g. according to the histogram of the occurrences of palette indices in one or more previous pictures, in (de)coding order. In addition, or instead, the encoder may derive the long-term palette based on palette entries that were not predicted (copied) from a previously coded CU but explicitly signaled during coding of each CU in one or more previous pictures, in (de)coding order. Palette entries that were explicitly signaled in the previous picture can be sorted from the most frequent to least frequent and a specific algorithm can be used to determine the size of the long-term palette (such as terminating the list when "0" (zero) occurrence (or a certain threshold) is encountered on the sorted list of entries. For example, the threshold can be determined using the ratio of the palette coded CUs that used long-term palette in coding of palette entries to total number of palette coded CUs in the previous pictures.) Yet further in addition or instead, the encoder may use the information on how the source content for encoding was created for deriving a long-term palette. For example, a stereo matching algorithm may be preceded by or may include an analysis of the smallest and largest depth/disparity and/or an estimation depth/disparity histogram. Sample values or original uncompressed depth/disparity picture may be quantized to certain levels, the number of which may be smaller than what the bit-depth used in coding allows. An encoder may choose a long-term palette to be a subset of the quantized depth/disparity values, where the subset may present e.g. the estimated depth/disparity histogram After having derived an initial long-term palette with the previous step(s), the encoder may exclude those palette entries that are included in the conventional palette(s) of one or more CUs of the current picture, such as the first CU of the picture.

According to a second embodiment, the long-term palette is not signalled at slice header. Instead, the long-term palette can be constructed during the encoding or decoding process and dynamically updated after coding each CU. Then the palette used for coding of each CU is constructed using information either from neighboring palettes, from the long-term palette or as separately signaled. According to an embodiment, a coding unit compressed in palette mode is decoded as follows: At the beginning of coding the first CU of a slice, the long-term palette size is reset to 0 (zero), which indicates that there are no entries yet. Next, an indication of the palette prediction mode is decoded for each CU coded in palette mode, where candidate palette prediction mode comprises at least the usage of long-term palette mode. If the long-term palette is used for the current CU, palette indexes are decoded, where at least one palette index refers to a color value in the long-term palette. After coding a CU, if the CU is coded in palette mode and if it uses some colors that were not copied from neighbors and were not copied from the long-term palette, the corresponding new color is added to the long-term palette with a long-term palette update process.

It is to be noticed, that difference between the first and the second embodiments is that in the first embodiment, the long-term palette is signaled at slice header, whereas in the second embodiment, the long-term palette is constructed and dynamically updated after coding each CU.

The second embodiment can be implemented in different ways. For example, the long-term palette information can be reset at various locations, such as before the first CU of the slice, picture or CTU row. The reset locations may be pre-defined, for example in a coding standard, or may be indicated by an encoder into a bitstream and decoded by a decoded from a bitstream.

After the long-term palette information is reset, the long-term palette may be initialized in for example one or more of the following ways or a combination thereof. The initialization may be pre-defined for example in a coding standard, or may be indicated in a bitstream by an encoded and decoded from the bitstream by a decoded. The long-term palette may be initialized to be empty. Alternatively, the dynamic long-term palette may be initialized to be equal to a signaled long-term palette. The initial long-term palette may derived for example from a previous picture, such as from a reference-layer picture when the current picture is an enhancement-layer picture. For example, the initial long-term palette may contain the palette colors used in a collocated CU in a previous picture but not included in the conventional palette for the current CU. The collocated CU may be concluded to be spatially collocating, or temporal motion and/or disparity may be taken into account in determining the collocated CU.

In some embodiments, two or more long-term palettes are dynamically maintained. A first long-term palette is updated based on the first CTU of each CTU row only or an integer number of first CTUs, which may be predefined, for example in a coding standard, or may be indicated by an encoder into a bitstream and decoded by a decoder from a bitstream. At the beginning of a CTU row, a second set long-term palette may be set to be equal to the first long-term palette of the previous row, and palettes may enable parallel encoding and/or decoding of CTU rows and may be used together with the so-called wavefront parallel processing. For parallel encoding or decoding of CTU rows, an additional long-term palette may be maintained for each CTU row that is processed in parallel.

The size of the long-term palette can be fixed, and hence not signaled. Instead, the size of the long-term palette can be adaptive and signaled.

The binarization of the long-term palette indexes signaled at CU level can depend on the long-term palette size (e.g. different fixed length coding sizes can be used).

The binarization of the long-term palette indexes signaled at CU level can be further signaled. For example, depending on the histogram of the occurrences of palette indices, different VLC tables can be used.

The palette used for a CU can be a combination of the long-term palette and a palette signaled at CU level. For example, a palette for a certain CU may comprise at least one palette entry from a long-term palette and at least one palette entry from palette predicted from a palette used for a previously decoded CU. A palette for a certain CU may also comprise at least one palette entry from a long-term palette and at least one palette entry that is signaled individually for the CU.

It can be signaled which entries of the palette for a certain CU are copied from a long-term palette and which entries are copied from a palette used for a previously decoded CU.

The long-term palette update process can be implemented in different ways: The new color is only added to the long-term palette, if none of the entries within the long-term palette contains that color. The new color is only added to the long-term palette first by checking subset of the entries within the long-term palette if the same color exists or not. If the palette is full before the "new color", it is possible to increase the palette size by 1, or the color that has been entered the long-term palette first is removed and the new color is added, or the color that is used the least is removed, and the new color is added. After the new color has been added, the positions of the colors within the long-term palette can be further updated.

The long-term palette can be signaled e.g. using the following syntax where cldx refers to different color channels, long_term_palette_size refers to the size of the long-term palette and long_term_palette_entries defines the sample value for each palette entry:

| | |
|---|---|
| for (cldx=0; cldx<3; cldx++){ | |
| **long_ term_palette_size**[cldx] | u(v) |
| for ( i=0; i< long_term_palette_size[cldx]; i++){ | |
| **long_term_palette_entries**[ cldx] [ i] | u(v) |
| } | |
| } | |

The table below provides an example of syntax using the signaled long-term palette to construct an active palette for a coding unit. First previous_palette_entry_flag syntax elements are used to identify which palette entries are copied from a local reference palette. Those are followed by an indication of the number of additional palette entries (signaled with the palette_num_signalled_entries syntax element). For each of the additional entries it is signaled if the one is copied from the long-term palette (with syntax element copy_from_long_term_palette_flag) and if so, which entry in the long-term palette is copied to the active palette (with index_in_long_term_palette syntax element).

| palette_coding_component( x0, y0, CbWidth, CbHeight, NumComp ) { | Descriptor |
|---|---|
| compOffset = ( NumComp  = =  3 ) ? 0 : ( NumComp – 1 ) | |
| nCbS = ( 1 << log2CbSize ) | |
| numPredPreviousPalette = 0 | |
| for( i = 0; i < previousPaletteSize; i++ ) { | |
| **previous_palette_entry_flag**[ i ] | ae(v) |
| if ( previous_palette_entry_flag[ i ] ) { | |
| for ( cIdx = compOffset; cIdx < NumComp + compOffset; cIdx++ ) | |
| palette_entries[ cIdx ][ numPredPreviousPalette ] = previousPaletteEntries[ cIdx ][ i ] | |
| numPredPreviousPalette++ | |
| } | |
| } | |
| if( numPredPreviousPalette < 31 ) | |
| **palette_num_signalled_entries** | ae(v) |
| for ( cIdx = compOffset; cIdx < NumComp + compOffset; cIdx++ ) | |
| for( i = 0; i < palette_num_signalled_entries; i++ ){ | |
| if( long_term_palette_size > 0 ) | |
| **copy_from_long_term_palette_flag**[cIdx][i] | u(1) |
| if(copy_from_long_term_palette_flag[cIdx][i] ) { | |
| **index_in_long_term_palette** [cIdx ][ i ] | u(v) |
| palette_entries[ cIdx ][ numPredPreviousPalette + i ] = long_term_palette_entries[ cIdx ][ index_in_long_term_palette [cIdx ][ i ] ] | |
| } | |
| else | |
| **palette_entries**[ cIdx ][ numPredPreviousPalette + i ] | ae(v) |
| } | |
| ... | |

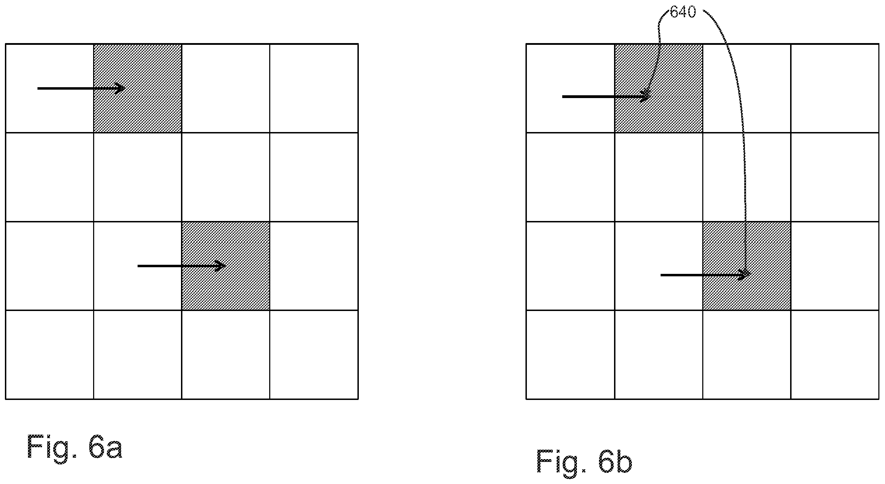

In figures 6a and 6b squares represent coding units and gray shaded squares represent coding units that have similar color characteristics and different color characteristics than the white squares. In figure 6a, the palette of gray coding units cannot be predicted accurately, but in figure 6b, a long-term palette for the slice 640 can be signaled and used to code gray coding units that have different color characteristics.

The present embodiments provide advantages over approaches utilizing fixed scanning of coding units. For example, by means of the method, the coding efficiency of the palette based image/video coding is improved without significant effect on encoding or decoding complexity.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims

## Claims

1. An apparatus configured to:

   construct a palette used for decoding a coding unit using a signaled color value for the coding unit and a color value entry from a long-term palette, wherein the palette for decoding the coding unit is constructed to be a combination of the signaled color value for the coding unit and the color value referred by the at least one long term palette entry; and
   update the long-term palette after decoding a coding unit based on adding a new color value to the long term palette wherein the new color is a color value in the palette for the coding unit that was not copied from the long term palette, and **characterized in that** the long term palette is signaled in a sequence parameter set or a video parameter set.

2. The apparatus according to claim 1, further configured to signal which entries of the palette for a certain coding unit are copied from a long-term palette and how many entries are explicitly signaled.

3. The apparatus according to claim 1, further configured to maintain two or more long-term palettes dynamically.

4. The apparatus according to claim 1, wherein the size of the long-term palette is fixed or adaptive.

5. The apparatus according to claim 1, wherein the palette used for a coding unit can be a combination of the long-term palette and a palette signaled at coding unit level.

6. The apparatus according to claim 1, further configured to perform a long-term palette update process, where a new color is added to the long-term palette if none of the entries within the long-term palette contains that color.

7. The apparatus according to claim 1, further configured to perform long-term palette update process, where a new color is added to the long-term palette first by checking subset of the entries within the long-term palette if the same color exists or not.

8. The apparatus according to claim 1, further configured to perform long-term palette update process, where before adding the new color it is determined that the palette is full whereby one of the following is performed:

   - increasing the palette size by 1;
   - removing the color that entered the long-term palette the first and adding the new color;
   - removing the color that is used the least and adding the new color.

9. A method comprising; constructing a palette used for decoding a coding unit using a signaled color value for the coding unit and a color value entry from a long-term palette, wherein the palette for decoding the coding unit is constructed to be a combination of the signaled color value for the coding unit and the color value referred by the at least one long term palette entry; and updating the long-term palette after decoding the coding unit based on adding a new color value to the long term palette, wherein the new color is a color value in the palette for the coding unit that was not copied from the long term palette, **characterized in that** the long term palette is signaled in a sequence parameter set or a video parameter set.

## Patentansprüche

1. Vorrichtung, die konfiguriert ist zum Konstruieren einer Palette, die zum Decodieren einer Codierungseinheit unter Verwendung eines signalisierten Farbwerts für die Codierungseinheit und eines Farbwerteintrags aus einer Langzeitpalette verwendet wird, wobei die Palette zum Decodieren der Codierungseinheit derart konstruiert ist, dass sie eine Kombination des signalisierten Farbwerts für die Codierungseinheit und des Farbwerts, auf den durch den mindestens einen Langzeitpaletteneintrag Bezug genommen wird, ist; und

Aktualisieren der Langzeitpalette nach dem Decodieren einer Codierungseinheit auf der Grundlage des Hinzufügens eines neuen Farbwerts zur Langzeitpalette, wobei die neue Farbe ein Farbwert in der Palette für die Codierungseinheit ist, der nicht aus der Langzeitpalette kopiert worden ist, **dadurch gekennzeichnet, dass** die Langzeitpalette in einem Folgeparametersatz oder einem Videoparametersatz signalisiert wird.

2. Vorrichtung nach Anspruch 1, die ferner konfiguriert ist, zu signalisieren, welche Einträge der Palette für eine bestimmte Codierungseinheit von einer Langzeitpalette kopiert werden und wie viele Einträge ausdrücklich signalisiert werden.

3. Vorrichtung nach Anspruch 1, die ferner konfiguriert ist, zwei oder mehr Langzeitpaletten dynamisch zu pflegen.

4. Vorrichtung nach Anspruch 1, wobei die Größe der Langzeitpalette fest oder adaptiv ist.

5. Vorrichtung nach Anspruch 1, wobei die Palette, die für eine Codierungseinheit verwendet wird, eine Kombination der Langzeitpalette und einer Palette, die auf der Codierungseinheitsebene signalisiert wird, sein kann.

6. Vorrichtung nach Anspruch 1, die ferner konfiguriert ist, einen Langzeitpaletten-Aktualisierungsvorgang durchzuführen, wobei der Langzeitpalette eine neue Farbe hinzugefügt wird, wenn keiner der Einträge in der Langzeitpalette die Farbe enthält.

7. Vorrichtung nach Anspruch 1, die ferner konfiguriert ist, einen Langzeitpaletten-Aktualisierungsvorgang durchzuführen, wobei der Langzeitpalette eine neue Farbe hinzugefügt wird, indem zunächst in einer Untermenge der Einträge in der Langzeitpalette geprüft wird, ob dieselbe Farbe vorliegt oder nicht.

8. Vorrichtung nach Anspruch 1, die ferner konfiguriert ist, einen Langzeitpaletten-Aktualisierungsvorgang durchzuführen, wobei vor dem Hinzufügen der neuen Farbe bestimmt wird, dass die Palette voll ist, wobei Folgendes durchgeführt wird:

- Erhöhen der Palettengröße um 1 oder
- Entfernen der Farbe, die zuerst in die Langzeitpalette eingegeben wurde, und Hinzufügen der neuen Farbe oder
- Entfernen der Farbe, die am wenigsten verwendet wird und Hinzufügen der neuen Farbe.

9. Verfahren, das Folgendes umfasst: Konstruieren einer Palette, die zum Decodieren einer Codierungseinheit unter Verwendung eines signalisierten Farbwerts für die Codierungseinheit und eines Farbwerteintrags aus einer Langzeitpalette verwendet wird, wobei die Palette zum Decodieren der Codierungseinheit derart konstruiert ist, dass sie eine Kombination des signalisierten Farbwerts für die Codierungseinheit und des Farbwerts, auf den durch den mindestens einen Langzeitpaletteneintrag Bezug genommen wird, ist; und Aktualisieren der Langzeitpalette nach dem Decodieren der Codierungseinheit auf der Grundlage des Hinzufügens eines neuen Farbwerts zur Langzeitpalette, wobei die neue Farbe ein Farbwert in der Palette für die Codierungseinheit ist, der nicht aus der Langzeitpalette kopiert worden ist, **dadurch gekennzeichnet, dass**

die Langzeitpalette in einem Folgeparametersatz oder einem Videoparametersatz signalisiert wird.

**Revendications**

1. Appareil, configuré pour :

créer une palette utilisée pour décoder une unité de codage en utilisant une valeur de couleur signalée pour l'unité de codage et une entrée de valeur de couleur pour une palette à long terme, la palette destinée à décoder l'unité de codage étant créée pour être une combinaison de la valeur de couleur signalée pour l'unité de codage et de la valeur de couleur à laquelle se réfère ladite au moins une entrée de palette à long terme ; et

mettre à jour la palette à long terme après le décodage d'une unité de codage sur la base de l'ajout d'une nouvelle valeur de couleur à la palette à long terme, la nouvelle couleur étant une valeur de couleur dans la palette pour l'unité de codage qui n'a pas été copiée depuis la palette à long terme, et

**caractérisé en ce que** la palette à long terme est signalée dans un ensemble de paramètres de séquence ou un ensemble de paramètres vidéo.

2. Appareil selon la revendication 1, configuré en outre pour signaler quelles entrées de la palette destinées à une certaine unité de codage sont copiées depuis une palette à long terme et combien d'entrées sont signalées explicitement.

3. Appareil selon la revendication 1, configuré en outre pour maintenir de manière dynamique deux ou plusieurs palettes à long terme.

4. Appareil selon la revendication 1, dans lequel la taille de la palette à long terme est fixe ou adaptative.

5. Appareil selon la revendication 1, dans lequel la palette utilisée pour une unité de codage peut être une combinaison de la palette à long terme et d'une palette signalée au niveau de l'unité de codage.

6. Appareil selon la revendication 1, configuré en outre pour effectuer un processus de mise à jour de palette à long terme, dans lequel une nouvelle couleur est ajoutée à la palette à long terme si aucune des entrées dans la palette à long terme ne contient cette couleur.

7. Appareil selon la revendication 1, configuré en outre pour effectuer un processus de mise à jour de palette à long terme, dans lequel une nouvelle couleur est ajoutée à la palette à long terme en vérifiant d'abord un sous-ensemble des entrées dans la palette à long terme pour savoir si la même couleur existe ou non.

8. Appareil selon la revendication 1, configuré en outre pour effectuer un processus de mise à jour de palette à long terme, dans lequel, avant l'ajout de la nouvelle couleur, il est déterminé que la palette est pleine, de sorte que l'une des étapes suivantes est effectuée :

   - l'augmentation de 1 de la taille de la palette ;
   - la suppression de la couleur qui est entrée en premier dans la palette à long terme et l'ajout de la nouvelle couleur ;
   - la suppression de la couleur qui est la moins utilisée et l'ajout de la nouvelle couleur.

9. Procédé, comprenant :

   la création d'une palette utilisée pour décoder une unité de codage en utilisant une valeur de couleur signalée pour l'unité de codage et une entrée de valeur de couleur pour une palette à long terme, la palette destinée à décoder l'unité de codage étant créée pour être une combinaison de la valeur de couleur signalée pour l'unité de codage et de la valeur de couleur à laquelle se réfère ladite au moins une entrée de palette à long terme ; et
   la mise à jour de la palette à long terme après le décodage de l'unité de codage sur la base de l'ajout d'une nouvelle valeur de couleur à la palette à long terme, la nouvelle couleur étant une valeur de couleur dans la palette pour l'unité de codage qui n'a pas été copiée depuis la palette à long terme,
   **caractérisé en ce que** la palette à long terme est signalée dans un ensemble de paramètres de séquence ou un ensemble de paramètres vidéo.

Fig. 1

Fig. 2

FIG. 3

Fig. 4

Fig. 5

Fig. 6b

Fig. 6a

**REFERENCES CITED IN THE DESCRIPTION**

**Non-patent literature cited in the description**

- **SAN JOSE.** Non-RCE4: Major color table (palette) sharing. *Joint Collaborative Team on Video Coding (JCT-VC) of the ITU-T and ISO/IEC 16th meeting,* January 2014